# FASCICULE DE BREVET EUROPEEN

(11) **EP 2 759 639 B1**
(45) Date de publication et mention de la délivrance du brevet: **03.01.2018**
(21) Numéro de dépôt: 13153756.5
(22) Date de dépôt: 01.02.2013
(51) Int. Cl.: E02D 27/42, E04H 12/20

(54) **Pylône de mesures**
Messmast
Measurement tower

(30) Priorité: 28.01.2013 FR 1350702
(43) Date de publication de la demande: 30.07.2014
(73) Titulaire: Foure Lagadec, 76600 Le Havre (FR); CGTI, 27120 Pacy-sur-Eure (FR)
(72) Inventeur: Rescan, Alain, 76620 LE HAVRE (FR); Feyfant, Patrick, 27120 MENILLES (FR); Menant, Christophe, 27180 SAINT SEBASTIEN DE MORSENT (FR)
(74) Mandataire: Berger, Helmut

(56) Documents cités:
- EP-A1- 2 312 091
- EP-A1- 2 441 893
- GB-A- 931 986

## Description

L'invention concerne une structure de base d'un pylône de mesures offshore et un pylône comportant une telle structure de base.

L'installation d'éoliennes, notamment offshore, c'est-à-dire en mer, demandant des investissements importants tant sur le plan matériel que sur le plan financier, il est essentiel d'intégrer dans les éléments sur la base desquelles sera effectuée la sélection des futurs emplacements des éoliennes, aussi les résultats d'observations et de mesures effectués sur une certaine durée et éventuellement pendant une certaine période de l'année, comme par exemple des observations et mesures anémométriques, notamment les mesures de la vitesse du vent et de la durée pendant laquelle une vitesse minimale prédéterminée du vent peut être observée. Pour obtenir des valeurs exploitables pour ces éléments, les observations et mesures doivent être effectuées à la hauteur prévue des générateurs des éoliennes. Aussi, au moins une partie des appareils de mesure nécessaires à cet effet doivent être installés, pour la durée demandée, sur un pylône ayant la hauteur demandée. Cependant, l'installation d'un pylône de mesures en mer est très complexe et donc très chère, ne serait-ce que par le poids des éléments à assembler et les moyens de transport et de manutention ainsi nécessaires.

Les pylônes de mesure en mer sont aujourd'hui des pylônes autostables ayant un mât fixé sur une structure métallique posée ou fixée sur le fond de la mer (structure communément appelée jacket). Cette structure en mer souvent monobloc nécessite des moyens de transport sur base et des moyens de levage importants, onéreux et dont les disponibilités sont réduites ou tributaire d'une planification sur le long terme.

Le mât fixé sur ce jacket de section variable carré ou triangulaire sur lequel sont disposés les éléments de mesure, génère des turbulences variables avec la hauteur compte tenu de la différence de géométrie du pylône aux niveaux des équipements de mesure.

L'empattement à la base imposé de ces pylônes autostables implique une structure lourde et peu économique.

De par leur poids, ces pylônes autoportants nécessitent des moyens logistiques et d'installation importants tels que, par exemple, des grues sur barge.

Le document US-B-7 163 355 décrit un système offshore de génération d'électricité par effet éolien qui comprend un corps monolithique flottant présentant trois bras disposés en étoile avec, au bout de chaque bras, une jambe verticale adaptée pour prendre appui sur le sol marin lorsque le système est à sa place d'exploitation. Sur le corps monolithique s'élève - soit au centre de celui-ci soit au bout d'une rallonge de chacun des bras - un mât avec un générateur d'électricité. Le système est construit dans un chantier naval et remorqué vers le lieu d'exploitation. Pendant le remorquage, les trois jambes sont rétractées, c'est-à-dire elles s'élèvent verticalement sur le corps monolithique. Et lorsque le système est en place, les trois jambes sont descendues et prennent appui sur le sol maritime.

Le but de la présente invention est de proposer une solution permettant de réduire sensiblement l'engagement matériel et financier pour la mise en place offshore temporaire d'un pylône de mesures.

Le but de l'invention est atteint avec un pylône de mesures comprenant un mât haubané adapté pour être pourvu d'au moins un instrument de mesure et une structure de base comprenant des éléments de fondation et un support adapté pour recevoir le mât.

Selon différents modes de réalisation possibles, le pylône de mesures de l'invention peut également comprendre l'une au moins des caractéristiques suivantes, considérées isolément ou en combinaison :
les éléments de fondation comportent des pieux adaptés pour être enfoncés au fond de la mer ;
les éléments de fondation comportent des corps morts adaptés pour être posés au fond de la mer ;
les éléments de fondation et le support sont reliés entre eux par des éléments de liaison rigides ;
le support est relié aux éléments de fondation par des éléments de liaison rigides et les éléments de fondation sont reliés entre eux par des câbles tendus ;
les éléments de fondation, le support, les éléments de liaison et les câbles sont adaptés pour être assemblés de manière démontable ;
la structure de base comprend des organes d'attache comportant par exemple des anneaux adaptés pour recevoir des haubans ;
la structure comporte une plateforme ;
le support comprend un dispositif de compensation adapté pour reprendre les efforts du mât.

Le but de l'invention est également atteint avec une structure de base pour un pylône de mesures, la structure de base comprenant des éléments de fondation et un support adapté pour recevoir un mât haubané.

Selon la présente invention, le pylône de mesures comprend donc deux parties, à savoir un mât et une structure de base sur laquelle le mât est fixé. Ce principe apporte au moins les avantages suivants :
- la structure de base peut être conçue de façon indépendante du mât qu'elle doit porter ;
- ainsi, une même structure de base peut servir pour différents mâts, par exemple aussi bien pour un mât en treillis que pour un mât tubulaire ;
- du fait que la structure de base présente un plan de référence formé par les points de fixation des haubans, elle peut être adaptée plus facilement à la morphologie du sol maritime et à d'autres contraintes imposées par le lieu offshore sur lequel le pylône de mesures doit être installé, lorsqu'elle est une unité séparée du mât que lorsqu'elle forme une unité constructive avec ce dernier ; et
- la structure de base peut recevoir successivement un premier mât pour qualifier le vent et les conditions environnementales et un second mât pour s'assurer de la performance d'un générateur ;
- la structure de base peut être formée par des éléments assemblés de façon démontables et peut ainsi être réutilisée ;
en effet, le pylône de mesures étant destiné à être mis en place pour la seule durée de l'étude pour qualifier le vent et les conditions environnementales, et cette durée pouvant être raccourcie s'il s'avère très rapidement que l'endroit prévu pour l'installation d'une éolienne ne convient pas pour quelle que raison que ce soit, la structure de base ne peut être rentabilisée que par réutilisation.

En ce qui concerne le mât haubané, il est avantageux d'utiliser un mât treillis en acier, puisque
- il est constitué de barres de faible longueur et de faible poids assemblées par boulons ;
- les barres peuvent être des profilés ouverts du commerce (U, cornières,...) ou des profilés tubulaires du commerce ;
- le mât haubané peut avantageusement être de section triangulaire (triangle équilatéral) ;

D'autres caractéristiques et avantages de la présente invention ressortiront de la description ci-après de trois modes de réalisation de l'invention. La description est faite en référence aux dessins annexés dont
- la figure 1 est une vue en élévation d'une structure de base selon un premier mode de réalisation de l'invention,
- la figure 2 est une vue de dessus de la structure de base de la figure 1,
- la figure 3 est une vue en élévation d'un pylône selon un deuxième mode de réalisation de l'invention et
- la figure 4 représente, en une vue en élévation, un pylône selon un troisième mode de réalisation de l'invention.

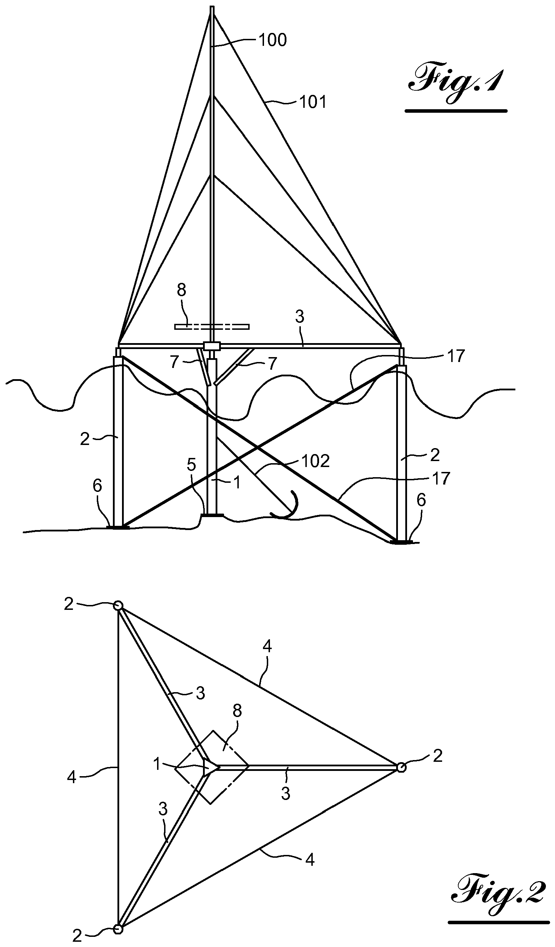

La figure 1 représente, en une vue en élévation, un premier mode de réalisation d'un pylône de mesures selon l'invention. Le pylône comprend une structure de base adaptée pour recevoir un mât haubané 100 en treillis ou tubulaire. La structure de base comprend à cet effet un pieu porteur 1 adapté pour recevoir et supporter le mât haubané 100, trois pieux de maintien 2 auxquels seront attachés des haubans 101 permettant de stabiliser le mât haubané 100 sur la structure de base, trois bras 3 reliant l'extrémité supérieure du pieu porteur 1 avec chacune des extrémités supérieures des trois pieux de maintien 2, ainsi que trois câbles tendeurs 4 reliant entre eux les extrémités supérieures des trois pieux de maintien 2.

Le pieu porteur 1 s'élève sur une semelle 5 adaptée pour prendre appui sur le fond de la mer et les pieux de maintien 2 s'élèvent sur des corps morts 6 également adaptés pour prendre appui sur le fond de la mer. Pour reprendre les efforts agissant sur les pieux 1 et 2, la structure de base est avantageusement mais non nécessairement pourvue de bracons 7. Selon une variante de réalisation, le pieu porteur 1 est sécurisé par des ancres 102 pour reprendre les efforts tranchants dans les axes sous les bras 3 de la structure de base posée.

Les bras 3 peuvent être des poutres tubulaires de gros diamètre ou des poutres en treillis. Si ces bras 3 sont en treillis, la section pourra avantageusement être de section triangulaire (triangle équilatéral) avec une face horizontale (face supérieure) pouvant être équipée d'un caillebotis et de garde-corps permettant une circulation piétonne sécurisée entre la base du mât 100 et les extrémités des bras 3.

Avantageusement, l'extrémité des bras 3 liaisonnée en tête de pieu 2 sera équipée d'une zone d'appontage de bateau permettant au personnel de maintenance d'accéder au pied du mât 100 et à une éventuelle plateforme de travail 8.

Si nécessaire pour assurer la stabilité générale du système, six câbles précontraints 17 sont ajoutés, en forme de Croix de Saint André, pour contreventer (trianguler) les trois faces constituées à la verticale des câbles 4 : un câble reliant la tête de chaque pieu 2 avec la base des deux autres pieux 2.

Selon une autre variante de réalisation, non représentée, chacun des trois pieux de maintien 2 peut être un pieu à longueur variable, par exemple télescopique, pour permettre une adaptation de la structure de base aux dénivellements du fond de la mer dans la zone de pose de la structure.

En effet, lorsque les trois pieux de maintien 2 sont de même longueur mais ne sont pas posés au même niveau sur le fond de la mer, les bras 3 transmettent les efforts agissant sur les pieux de maintien 2 de manière différente sur le pieu porteur 1 et, inversement, les efforts agissant sur le mât 100 et ainsi sur le pieu porteur 1 seront transmis aux pieux de maintien 2 de manière inégale, ce qui risque d'accroître les effets de fatigue sur la structure de base et sur sa stabilité.

Aussi, il est préférable d'installer la structure de base de façon que les extrémités supérieures des pieux de maintien 2 et du pieu porteur 1 soient sensiblement au même niveau. En conséquence, tout dénivellement dépassant une valeur de tolérance prédéterminée entre les emplacements des pieux 1 et 2 au fond de la mer doit être compensé par une adaptation de la longueur des pieux de maintien 2.

Il est par ailleurs également préférable que les extrémités supérieures des pieux de maintien 2 soient sensiblement au même niveau que celle du pieu porteur 1 lorsque la structure doit être équipée d'une plateforme de travail 8.

Des dispositifs d'interface flexibles peuvent être prévus entre les bras 3 et la tête du pieu porteur 1, ainsi qu'entre les bras 3 et les têtes des pieux de maintien 2.

La figure 2 représente la structure de base du pylône de la figure 1 en une vue de dessus. Elle montre plus particulièrement que les trois pieux de maintien 2 sont disposés de façon que leurs emplacements définissent un triangle équilatéral dont les trois côtés sont formés par les câbles tendeurs 4. De plus, cette figure montre la disposition et les dimensions de la plateforme de travail 8 de section adaptée (triangulaire, carrée ou autre) par rapport à l'étendue de la structure de base.

En ce qui concerne les dimensions des éléments de la structure de base, l'exemple suivant est retenu : pour un mât 100 ayant une hauteur d'environ 80 m, la longueur du pieu porteur 1 et des pieux de maintien 2 est environ 40 m et le diamètre de chacun de ces pieux est de 2 m. La longueur de chacun des bras 3, dont le diamètre est de l'ordre de 1 m, est environ 45 m, ce qui demande à chacun des câbles tendeurs 4 une longueur d'environ 78 m. La longueur des pieux 1 et 2 est basée sur une profondeur moyenne de 23 m de la mer et d'une hauteur supplémentaire d'environ 17 m pour le marnage et la houle.

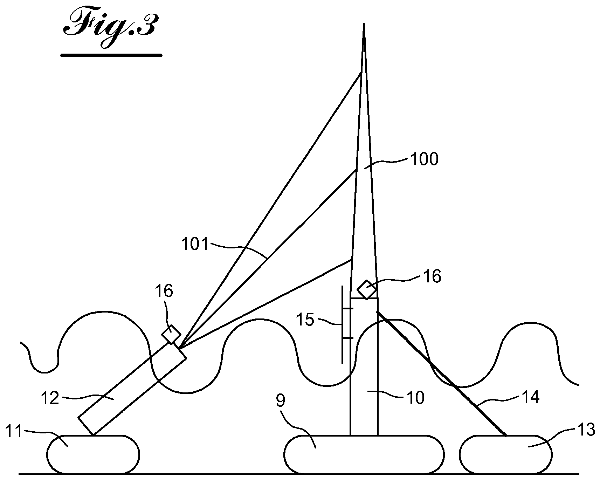

La figure 3 représente, en une vue en élévation, un second mode de réalisation d'un pylône de mesures selon l'invention. Le pylône comprend une structure de base comportant un corps mort 9 sur lequel s'élève un pieu porteur 10 adapté pour recevoir le mât 100, trois corps morts 11 pourvus de supports haubans 12 sur lesquels sont attachés les haubans 101 adaptés pour stabiliser le mât 100, ainsi que - si cela s'avère nécessaire - trois corps morts 13 pourvus de moyens d'attache pour des haubans 14 servant à stabiliser le pieu porteur 10. Les corps morts 9, 11 et 13 sont adaptés pour être posés sur le fond de la mer et maintenus en place moyennant des ancrages ou, dans des cas favorables, par leur poids propre.

La figure 3 montre, à titre d'exemple non limitatif d'éléments supplémentaires pratiques et de sécurité, une passerelle d'accès 15 et des feux de signalisation 16 selon le code maritime. Lorsque la structure de support du pylône est pourvue d'une plateforme de travail 8, la passerelle 15 est fixée alternativement au bord de la plateforme ou sur le pieu porteur 10.

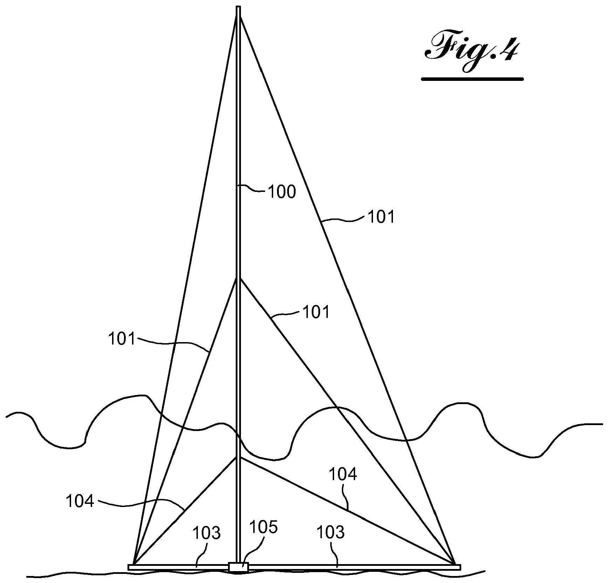

La figure 4 représente, en une vue en élévation, un troisième mode de réalisation d'un pylône selon l'invention. Ce pylône diffère de celui selon le premier mode de réalisation par le fait que la structure de base est formée uniquement par des poutres horizontales 103 formant un cadre polygonal, de préférence triangulaire, et un support 105 pour le mât 100. La stabilité de cette structure de base est assurée par le poids propre des poutres 103 et du support 105.

En outre, le mât 100 est haubané dans sa partie inférieure, notamment celle se trouvant dans la mer, par des haubans supplémentaires amarinés 104.

## Revendications

1. Pylône de mesures comprenant un mât (100) porteur d'au moins un instrument de mesure et une structure de base de support du mât, **caractérisé en ce que** la structure de base prend appui sur le fond de la mer et **en ce que** des haubans (101) sont prévus pour stabiliser le mât par rapport au fond de la mer en étant fixés respectivement sur le mât et la structure de base (1).

2. Pylône selon la revendication 1, **caractérisé en ce que** la structure de base comprend des éléments de fondation (2 ; 9, 11).

3. Pylône selon la revendication 2, **caractérisé en ce que** les éléments de fondation comportent des pieux (2) adaptés pour être enfoncés au fond de la mer.

4. Pylône selon la revendication 2, **caractérisé en ce que** les éléments de fondation comportent des corps morts (9, 11) adaptés pour être posés au fond de la mer.

5. Pylône selon l'une quelconque des revendications 1 à 4, **caractérisé en ce que** les éléments de fondation (2) et le support (1) sont reliés entre eux par des éléments de liaison (3) rigides.

6. Pylône selon la revendication 5, **caractérisé en ce que** les éléments de fondation (2) sont reliés entre eux par des câbles (4) tendus.

7. Pylône selon la revendication 6, **caractérisé en ce que** les éléments de fondation (2), le support (1), les éléments de liaison (3) rigides et les câbles (4) sont adaptés pour être assemblés de manière démontable.

8. Pylône selon l'une quelconque des revendications 1 à 7, **caractérisé en ce que** la structure de base comporte une plateforme (8).

9. Pylône selon l'une quelconque des revendications 1 à 8, **caractérisé en ce que** la tête de pieu (2) est équipée d'une structure d'appontage pour bateau.

10. Structure de base pour un pylône de mesures selon l'une des revendication 1 à 9, la structure comprenant un support (1) adapté pour recevoir un mât (100).

11. Structure de base selon la revendication 10, **caractérisé en ce qu'**elle comprend des éléments de fondation (2 ; 9, 11).

## Patentansprüche

1. Messmast, umfassend einen Mast (100), der mindestens ein Messinstrument trägt, und eine den Mast stützende Basisstruktur, **dadurch gekennzeichnet, dass** sich die Basisstruktur auf dem Meeresgrund abstützt und dass Seile (101) vorgesehen sind, um den Mast in Bezug zum Meeresgrund zu stabilisieren, indem sie jeweils am Mast und an der Basisstruktur (1) befestigt sind.

2. Mast nach Anspruch 1, **dadurch gekennzeichnet, dass** die Basisstruktur Fundamentelemente (2; 9, 11) umfasst.

3. Mast nach Anspruch 2, **dadurch gekennzeichnet, dass** die Fundamentelemente Pfähle (2) aufweisen, die geeignet sind, um in den Meeresgrund getrieben zu sein.

4. Mast nach Anspruch 2, **dadurch gekennzeichnet, dass** die Fundamentelemente unbelebte Körper (9, 11) aufweisen, die ausgebildet sind, um auf dem Meeresgrund abgelegt zu sein.

5. Mast nach einem der Ansprüche 1 bis 4, **dadurch gekennzeichnet, dass** die Fundamentelemente (2) und die Basis (1) mit starren Verbindungsmitteln (3) miteinander verbunden sind.

6. Mast nach Anspruch 5, **dadurch gekennzeichnet, dass** die Fundamentelemente (2) mit gespannten Kabeln (4) miteinander verbunden sind.

7. Mast nach Anspruch 6, **dadurch gekennzeichnet, dass** die Fundamentelemente (2), die Basis (1), die starren Verbindungselemente (3) und die Kabel (4) ausgebildet sind, um demontierbar verbunden zu sein.

8. Mast nach einem der Ansprüche 1 bis 7, **dadurch gekennzeichnet, dass** die Basisstruktur eine Plattform (8) aufweist.

9. Mast nach einem der Ansprüche 1 bis 8, **dadurch gekennzeichnet, dass** der Pfahlkopf (2) mit einer Schiffsanlegestruktur ausgestattet ist.

10. Basisstruktur für einen Messmast nach einem der Ansprüche 1 bis 9, wobei die Struktur eine Basis (1) umfasst, die zur Aufnahme eines Masts (100) geeignet ist.

11. Basisstruktur nach Anspruch 10, **dadurch gekennzeichnet, dass** sie Fundamentelemente (2; 9, 11) umfasst.

## Claims

1. A measurement tower comprising a mast (100) supporting at least one measuring instrument and a support base structure for the mast, **characterized in that** the base structure bears on the seabed and **in that** anchor wires (101) are provided to stabilize the mast relative to the seabed while respectively being fastened on the mast and the base structure (1).

2. The tower according to claim 1, **characterized in that** the base structure comprises foundation elements (2; 9, 11).

3. The tower according to claim 2, **characterized in that** the foundation elements include piles (2) suitable for being pushed into the seabed.

4. The tower according to claim 2, **characterized in that** the foundation elements include deadman anchors (9, 11) suitable for being placed on the seabed.

5. The tower according to any one of claims 1 to 4, **characterized in that** the foundation elements (2) and the support (1) are connected to one another by rigid connecting elements (3).

6. The tower according to claim 5, **characterized in that** the foundation elements (2) are connected to one another by tightened cables (4).

7. The tower according to claim 6, **characterized in that** the foundation elements (2), the support (1), the rigid connecting elements (3) in the cables (4) are suitable for being assembled such that they can be disassembled.

8. The tower according to any one of claims 1 to 7, **characterized in that** the base structure includes a platform (8).

9. The tower according to any one of claims 1 to 8, **characterized in that** the pile head (2) is equipped with an aligning on deck structure for a boat.

10. A base structure for a measurement tower according to one of claims 1 to 9, the structure comprising a support (1) suitable for receiving a mast (100).

11. The base structure according to claim 10, **characterized in that** it comprises foundation elements (2; 9, 11).
